# EUROPEAN PATENT APPLICATION

(11) **EP 2 838 320 A1**
(43) Date of publication of application: **18.02.2015**
(21) Application number: 14177363.0
(22) Date of filing: 11.03.2009
(51) Int. Cl.: H05B 33/08, H05B 37/02, F21S 8/00, H04N 1/60, H04N 5/272, F21Y 101/02

(54) **A universal color control matrix**

(30) Priority: 11.03.2008 US 68938 P
(62) Divisional of application: 09719169.6
(71) Applicant: Robe Lighting Inc., Sunrise, FL 33325 (US); ROBE lighting s.r.o., 75661 Roznov pod Radhostem (CZ)
(72) Inventor: Kubis, Frantisek, 756 61 Roznov pod Radhostem (CZ)
(74) Representative: Käck, Stefan

(57) **Abstract**

A color changing automated luminaire is disclosed. The luminaire is configured to simultaneously receive a first color control input (12-20) of a first color control protocol (RGB, HIS, CMY) and a second color control input (12-20) of a different second color control protocol (RGB, HIS, CMY). Further, the luminaire is configured to process the first and second color control inputs (12-20) to combine the first and second color control inputs within a control matrix (2) of the luminaire.

## Description

### TECHNICAL FIELD OF THE INVENTION

The present invention generally relates to the control of lighting equipment and specifically to a means for the control of the color of the light from such an instrument. The system disclosed provides improvements to such systems to allow the user increased flexibility in the means of control.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will, at the least, provide control over the pan and tilt functions of the luminaire allowing the operator to control the direction the luminaire is pointing and thus the position of the light beam on the stage or in the studio. Products may further provide control over the color as well as the focus, beam size, beam shape and beam pattern. The products manufactured by Robe Show Lighting such as the ColorSpot 1200E are typical of the art.

It is very common to control such luminaires through an industry standard protocol such as DMX512, RDM or ACN. The most common of these, DMX512, was developed by the United States Institute of Theatre Technology (USITT) in 1986 and has since been adopted and revised by the Entertainment Services Trade Association (ESTA) as an ANSI standard, E1.11. DMX512 is an EIA RS-485 based serial protocol designed to transmit 512 bytes of data (or channels) over a pair of data lines from a lighting control desk to a number of luminaires connected in parallel across the data lines. Each luminaire is configured to respond to a pre-defined block of these data bytes or channels and will internally assign them to the parameters needing control. For example channels 1 and 2 may control pan and tilt, 3 may control zoom and so on.

High power LEDs are commonly used in luminaires for example in the architectural lighting industry in stores, offices and businesses as well as in the entertainment industry in theatres, television studios, concerts, theme parks, night clubs and other venues. These LEDs are also being utilized in the automated lighting products mentioned above. For color control it is common to use an array of LEDs of different colors. For example a common configuration is to use a mix of Red, Green and Blue LEDs. This configuration allows the user to create the color they desire by mixing appropriate levels of the three colors. For example illuminating the Red and Green LEDs while leaving the Blue extinguished will result in an output that appears Yellow. Similarly Red and Blue will result in Magenta and Blue and Green will result in Cyan. By judicious control of these three controls the user may achieve any color they desire. The situation gets more complex when a fourth or more color of LED is added. The addition of further colors increase the possible gamut of colors available from the system but also increase the complexity of control and the difficulty for the user in finding the mix of levels that gives the desired result. In an attempt to simplify this task it is well known in the art to matrix the control of such systems back to a simple 3 channel control paradigm. The most common is Red, Green, Blue (RGB) where the user is always presented with controls for Red, Green and Blue levels even though the actual colors of the LEDs may be different and there may be more than three colors utilized. A further option known in the art is Hue, Saturation, Intensity (HSI) where one control (Hue) alters the Hue or color of the emitted light another (Saturation) alters the depth of that color and the final (Intensity) controls the overall brightness of the colored light. These two parameter sets are isomorphic and can both be mapped to the control of the same LED array to produce the same colors.

It would often be advantageous for the user to be able to select the mapping and matrix paradigm for the control of color over and above the standard RGB and HSI models. Such mappings may be advantageously selected by the user to facilitate control of color mixing lights in different circumstances.

Consequently there is a need for a system which can provide flexible and efficient selection and creation of color mapping and matrixing within a luminaire.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein
**FIGURE 1** shows a diagrammatic view of an entertainment lighting system;
**FIGURE 2** illustrates an LED based luminaire;
**FIGURE 3** illustrates an embodiment of the disclosure showing the control matrix with multiple inputs.

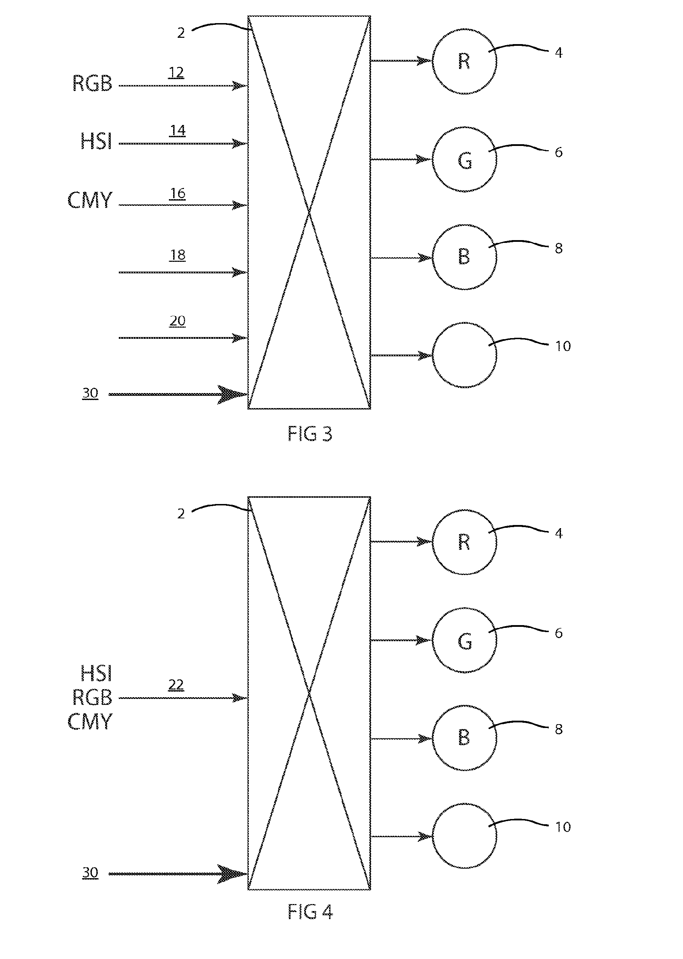

**FIGURE 3** illustrates a further embodiment of the disclosure showing the control matrix with a single input.

### DETAILED DESCRIPTION OF THE INVENTION

Preferred embodiments of the present invention are illustrated in the FIGUREs, like numerals being used to refer to like and corresponding parts of the various drawings.

The present invention generally relates to the control of lighting equipment and specifically to a means for the control of the color of the light from such an instrument. The system disclosed provides improvements to such systems to allow the user increased flexibility in the means of control.

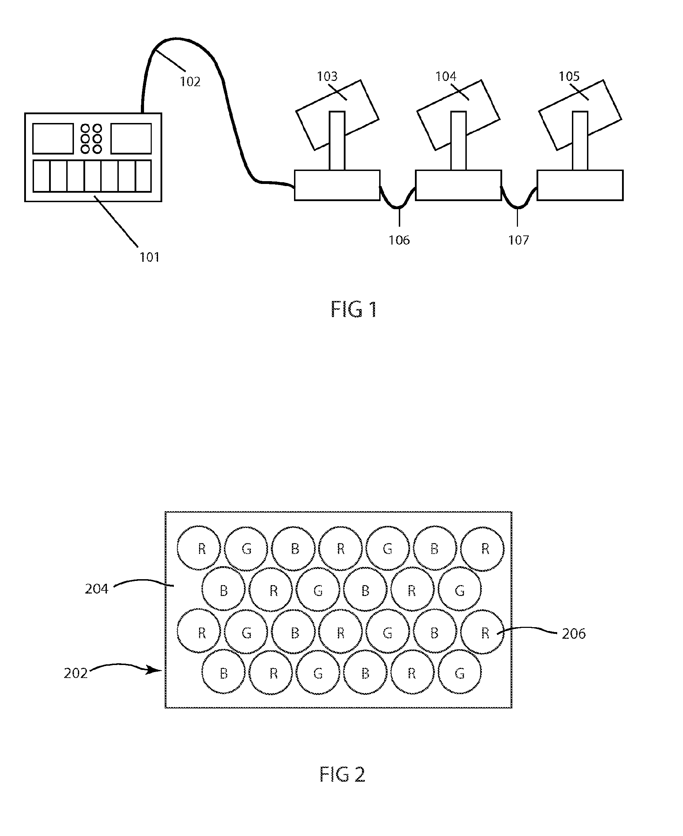

**Figure 1** shows a diagrammatic view of an entertainment lighting system. Control console **101** is connected to automated luminaire **103** through a control cable **102.** Control cable **102** may carry an RS-485 or an ethernet data signal. Automated luminaire **103** is further connected to automated luminaire **104** through control cable **106** and automated luminaire **104** is then connected to automated luminaire **105** through control cable **107.** Such serial daisy chain connection of multiple automated luminaires through multiple control cables to form a network is well known in the art.

In an embodiment of the present invention the communication link established by cables **102, 106** and **107** may be an RS485 connection carrying signals encoded using the DMX512 or ACN standard protocol. Such a protocol may be capable of bi-directional communication between the control console **101** and each of the connected automated luminaires **103, 104** and **105** collectively and separately.

In a further embodiment of the present invention the communication link established by cables **102, 106** and **107** may be an ethernet connection capable of bi-directional communication between the control console **101** and each of the connected automated luminaires **103, 104** and **105** collectively and separately.

**Figure 2** illustrates an LED based luminaire 202 which may contain a substrate or circuit board 204 on which is mounted an array containing a plurality of LEDs 206 of differing colors. In the example illustrated three colors of LEDs are present in the array, Red, Green and Blue. Other Luminaires employ different colored LED's in addition to other sources such as the Red, Green and Blue LEDs or in partial or complete substitution of the Red Green and/or Blue LEDs.

**Figure 3** illustrates an embodiment of the disclosure showing the control matrix. Control matrix **2** has multiple inputs **12, 14, 16, 18, 20** each of which is carrying a different protocol for the control of color. In the example cited protocols RGB **12, HSI 14** and CMY **16** are present. Further different protocols may be present on inputs **18** and **20.** Although the illustration has 5 inputs the disclosure is not so limited and any number of inputs may be utilized. Additionally connected to the control matrix **2** are color channel outputs **4, 6, 8, 10.** In the example illustrated Red **4,** Green **6,** and Blue **8** are present. Further, or substitute, LED colors **10** may also be controlled through matrix **2.** Although the illustration shown in **Figure 3** has 4 outputs the disclosure is not so limited and any number of color outputs may be utilized. Control matrix **2** contains a variable matrix and mapping system which allows the selection of a protocol input and the conversion of that input through the matrix to the color outputs for standardized control of the color outputs. The multiple protocol inputs may be combined within the matrix allowing the simultaneous control of the luminaire from a plurality of control protocols and paradigms. Such combination techniques may include summing, highest takes precedence or latest takes precedence or other combinations as well known in the art. The selection of the combination technique and the protocol inputs to use may be effected through master control input **30.** Master control input **30** may come from a further DMX512 control channel, from a local parameter selection and storage system, from a remote controller via an ethernet or internet connection, through an Infra Red remote control system or through other systems well known in the art.

**Figure 4** illustrates a further embodiment of the disclosure showing the control matrix. Control matrix **2** has a single input **22** which is carrying a single changeable protocol for the control of color. Input **22** may carry RGB, HSI, CMY or other protocols. Additionally connected to control matrix **2** are color channel outputs **4, 6, 8, 10.** In the example illustrated Red **4,** Green **6,** and Blue **8** are present. Further colors **10** may also be controlled through matrix **2.** Although the illustration shown in **Figure 4** has 4 outputs the disclosure is not so limited and any number of color outputs may be utilized. Control matrix **2** contains a variable matrix and mapping system which allows the selection of a protocol input and the conversion of that input through the matrix to the color outputs for standardized control of the color outputs. The selection of the protocol used on input **22** may be effected through master control input **30.** Master control input **30** may come from a further DMX512 control channel, from a local parameter selection and storage system, from a remote controller via an ethernet or internet connection, through an Infra Red remote control system or through other systems well known in the art.

In further embodiments of the disclosure the control of protocol selection and matrixing may be effected through a web page hosted on and served by the automated luminaire. The user may access the web page embedded on the luminaire either through the control console or by connecting a personal computer with a web browser to the lighting control network illustrated in **Figure 1****.** The protocol selection functions on the automated luminaire's web page may then be controlled through drag-and-drop or other control functionality well known in the art.

In a yet further embodiment of the disclosure the control of protocol selection is effected through a control panel or other user control on the automated luminaire. Many automated luminaires have a display and controls to allow a user to make configuration changes to the system. Such a display and control may be used to select and configure color protocol selection. An example of such a control panel is the Robe Navigation System.

In a yet further embodiment of the disclosure the control of such protocol selection is effected through a DMX512 link using the RDM (Remote Device Management) protocol or through other network or control mechanism as known in the art.

Once a new protocol selection is established for that automated luminaire from any of the luminaire control panel, control console, RDM , connected personal computer or other connected control device the automated luminaire matrix will retain and utilize that protocol selection until commanded otherwise and the personal computer may be removed from the lighting control network.

The use of the CMY protocol is particularly useful as many non-LED based automated luminaires utilize a subtractive color filter system to provide color mixing. Such color filter based systems typically utilize Cyan, Magenta and Yellow colored filters and use a CMY protocol for control as standard. The provision of a CMY subtractive color protocol for an RGB additive color based LED based luminaire allows the user to have a common protocol for all controlled luminaires. A specific embodiment of this disclosure would provide CMY control of an RGB based LED luminaire. Color matrix **2** may provide the conversion from CMY subtractive control input to RGB additive output.

An automated luminair with multiple aligning outputs is disclosed. At least one of the outputs is output from an image projecting optical subsystem.

While the invention has been described with respect to a limited number of embodiments, those skilled in the art, having benefit of this invention, will appreciate that other embodiments may be devised which do not depart from the scope of the invention as disclosed herein. Accordingly, the scope of the invention should be limited only by the attached claims.

## Claims

1. A color changing automated luminaire configured to:
simultaneously receive a first color control input of a first color control protocol and a second color control input of a different second color control protocol; and
process the first and second color control inputs to combine the first and second color control inputs within a control matrix (2) of the luminaire (103-105, 202).

2. The color changing automated luminaire of claim 1, wherein the luminaire (103-105, 202) is further configured to receive a master control input (30) which determines a combining paradigm for the combining of the first and second color control inputs.

3. The color changing automated luminaire of claim 2, wherein the paradigm is latest input takes precedence.

4. The color changing automated luminaire of claim 2, wherein the paradigm is convert to a common protocol and then highest takes precedence.

5. The color changing automated luminaire of claim 2, wherein the paradigm is convert to a common protocol and then summing the inputs.

6. The color changing automated luminaire of any of claims 1-5, wherein the first color control protocol is RGB and the second is either HSI or CMY.

7. The color changing automated luminaire of any of claims 1-5, wherein the first color control protocol is CMY and the second is either HSI or RGB.

8. The color changing automated luminaire of any of claims 1-5, wherein the first color control protocol is HSI and the second is either RGB or CMY.

9. The color changing automated luminaire of any of the preceding claims, wherein the luminaire (103-105, 202) employs a plurality of different light sources emitting light of a plurality of different colors; and wherein the different colors are Red, Green and Blue and the combining of the first and second color control inputs is RGB.

10. The color changing automated luminaire of any of the preceding claims, wherein the first and the second color control protocol are presented to the control matrix (2) of the luminaire (103-105, 202) via a single data link (22).

11. The color changing automated luminaire of any of claims 1-11, wherein the first and the second color control protocol are presented to the control matrix (2) of the luminaire (103-105, 202) via separate data channels (12-20).

12. The color changing automated luminaire of any of the preceding claims, wherein the first or the second color control protocol is a protocol to control the color of the light from the luminaire (103-105, 202), such as RGB, HIS or CMY.
